# EUROPÄISCHE PATENTANMELDUNG

(11) **EP 2 949 571 A1**
(43) Veröffentlichungstag der Anmeldung: **02.12.2015**
(21) Anmeldenummer: 14170655.6
(22) Anmeldetag: 30.05.2014
(51) Int. Cl.: B63H 21/17, B63H 23/24

(54) **Antriebssystem für ein Schiff und dessen Betrieb**

(71) Anmelder: Siemens Aktiengesellschaft, 80333 München (DE)
(72) Erfinder: Wycisk, Michael, 24248 Mönkeberg (DE); Wietoska, Jens, 28201 Bremen (DE)

(57) **Zusammenfassung**

Die Erfindung betrifft ein Antriebssystem (1) für ein Schiff, das ein elektrisches Bordnetz (2) mit einer festen Bordnetzfrequenz aufweist. Das Antriebssystem (1) umfasst einen Antriebselektromotor (10, 20) zum Antrieb des Schiffes, einen Frequenzumrichter (11, 21), über den dem Antriebselektromotor (10, 20) elektrische Energie aus dem Bordnetz (2) zuführbar ist, eine Antriebsmaschine (13, 23), einen von der Antriebsmaschine (13, 23) antreibbaren Antriebsgenerator (14, 24), und eine elektrische Welle (15, 25) zur Verbindung des Antriebselektromotors (10, 20) mit dem Antriebsgenerator (14, 24). Dabei ist der Antriebselektromotor (10, 20) wahlweise von dem Frequenzumrichter (11, 21), von dem Antriebsgenerator (14, 24) oder von dem Frequenzumrichter (11, 21) und dem Antriebsgenerator (14, 24) antreibbar. Vorzugsweise ist ferner ein Betriebsmodus vorgesehen, in dem von der Antriebsmaschine (13, 23) erzeugte Leistung über den Frequenzumrichter (11, 21) in das Bordnetz (2) eingespeist wird.

## Beschreibung

Die Erfindung betrifft ein Antriebssystem für ein Schiff und ein Verfahren zum Betrieb des Antriebssystems.

Insbesondere betrifft die Erfindung Antriebssysteme für schnelle leichte Schiffe, d. h. Schiffe mit geringer Verdrängung, beispielsweise leichte Kampf- oder Behördenschiffe wie leichte Patrouillenboote. Konventionell mechanisch über Dieselmotoren, Getriebe, Wellen und Propeller angetriebene derartige Schiffe haben technische, ökologische und ökonomische Nachteile bei Fahrprofilen mit einem hohen Anteil an Schwachlastbetrieb.

Zur Überwindung dieser Nachteile konventionell mechanischer oder konventionell diesel-elektrischer Antriebe werden kombinierte mechanische Antriebssysteme, z. B. so genannte COGOG-, CODAD- CODOG- und CODAG-Antriebssysteme, und in jüngerer Zeit auch elektromechanisch-hybride so genannte CODLAG-Antriebe eingesetzt. Die Nachteile der rein mechanisch kombinierten Antriebssysteme liegen in der aufwändigen Anpassung der Drehzahlen der unterschiedlichen bzw. unterschiedlich starken Antriebsmaschinen durch verschiedene Getriebestufen sowie viele Kupplungen mit erhöhter Schwingungsproblematik, den hohen Aufwänden bei den Querverbindungen der Energieflüsse sowie den relativ schlechten Wirkungsgraden bei kleinen Leistungen. Heutige hybride CODLAG-Antriebe basieren auf klassischen Hierarchieebenen in der Energieversorgung und Energieverteilung. Das Hauptnetz ist das Bordnetz, aus welchem auch die größeren elektrischen Antriebe für die Propeller über Umrichter gespeist werden. Dieser konventionelle Systemaufbau führt zu erheblichen Aufwänden bei der Sicherstellung der Spannungs- und Strom-Qualität (Schutzkonzepte, Selektivität, Netzrückwirkungen), bei der Energieverteilung sowie der Netzabsicherung und zu einem verhältnismäßig hohem Gewicht des Antriebs, insbesondere sofern ein hohes Maß an Redundanz erwartet wird. Vollelektrische Systeme konventioneller Ausführung sind äußerst gewichtsintensiv und eignen sich daher kaum für leichte Schiffe mit geringer Auslastung, da ein erheblicher Gewichtsanteil für den Antrieb den größeren zeitlichen Anteil nur mitgeführt (getragen) und nur relativ selten genutzt würde.

Der Erfindung liegt die Aufgabe zugrunde, ein verbessertes Antriebssystem insbesondere für leichte und schnelle Schiffe und ein Verfahren zum Betrieb eines derartigen Antriebssystems anzugeben.

Die Aufgabe wird erfindungsgemäß hinsichtlich des Antriebssystems durch die Merkmale des Anspruchs 1 und hinsichtlich des Verfahrens durch die Merkmale des Anspruchs 10 gelöst.

Vorteilhafte Ausgestaltungen der Erfindung sind Gegenstand der Unteransprüche.

Ein erfindungsgemäßes Antriebssystem ist für ein Schiff vorgesehen, das ein elektrisches Bordnetz mit einer festen Bordnetzfrequenz aufweist. Das Antriebssystem umfasst einen Antriebselektromotor zum Antrieb des Schiffes, einen Frequenzumrichter, über den dem Antriebselektromotor elektrische Energie aus dem Bordnetz zuführbar ist, eine Antriebsmaschine, einen von der Antriebsmaschine antreibbaren Antriebsgenerator und eine elektrische Welle zur Verbindung des Antriebselektromotors mit dem Antriebsgenerator. Dabei ist der Antriebselektromotor wahlweise von dem Frequenzumrichter oder von dem Antriebsgenerator antreibbar.

Ein erfindungsgemäßes Antriebssystem kann somit als ein rein elektrischer Hybridantrieb bezeichnet werden, bei dem ein erster elektrischer Antrieb durch einen aus dem Bordnetz gespeisten Frequenzumrichter und ein zweiter elektrischer Antrieb durch einen von einer Antriebsmaschine antreibbaren Antriebsgenerator realisiert wird und ein Antriebselektromotor zum Antrieb des Schiffes mit jedem dieser beiden elektrischen Antriebe antreibbar ist. Das Antriebssystem ermöglicht dadurch einen effizienten Antrieb des Schiffes in zwei Betriebsbereichen unterschiedlicher Antriebsleistung, wobei ein erster Betriebsbereich durch die Auslegung des ersten elektrischen Antriebs, d. h. des Bordnetzes und des Frequenzumrichters, und der zweite Betriebsbereich durch die Auslegung des zweiten elektrischen Antriebs, d. h. der Antriebsmaschine und des Antriebsgenerators, definiert wird. Insbesondere kann bei entsprechender Auslegung der beiden elektrischen Antriebe das Schiff bei kleinen Geschwindigkeiten effizient mittels des ersten elektrischen Antriebs und bei größeren Geschwindigkeiten mittels des zweiten elektrischen Antriebs angetrieben werden. Durch die rein elektrische Realisierung des Antriebssystems entfallen die oben genannten Nachteile kombinierter mechanischer (COGOG-, CODAD-, CODOG- und CODAG-) Antriebssysteme und elektromechanisch-hybrider CODLAG-Antriebe wie z. B. die Getriebe. Die Verwendung einer elektrischen Welle statt einer mechanischen Welle zur Kopplung des Antriebselektromotors an den Antriebsgenerator reduziert vorteilhaft das Gewicht des Antriebssystems gegenüber herkömmlichen vollelektrischen Antriebssystemen, wodurch sich ein erfindungsgemäßes Antriebssystem insbesondere für leichte Schiffe eignet.

Eine Ausgestaltung der Erfindung sieht eine Synchronisationsvorrichtung zur Synchronisation einer Generatordrehzahl des Antriebsgenerators mit einer Motordrehzahl des Antriebselektromotors vor.

Diese Ausgestaltung ermöglicht vorteilhaft den Wechsel von der Verwendung des Frequenzumrichters zu der Verwendung des Antriebsgenerators zum Antrieb des Antriebselektromotors, indem die Generatordrehzahl des Antriebsgenerators der jeweils aktuellen Motordrehzahl des Antriebselektromotors angepasst wird.

Eine weitere Ausgestaltung der Erfindung sieht eine als eine Gasturbine oder als ein Verbrennungsmotor ausgebildete Antriebsmaschine vor.

Dies ermöglicht die Verwendung von Standardkomponenten von Schiffsantrieben.

Eine weitere, besonders bevorzugte Ausgestaltung der Erfindung sieht einen als Hochtemperatur-Supraleiter-Generator ausgebildeten Antriebsgenerator vor, wobei der Antriebsgenerator und der Antriebselektromotor vorzugsweise jeweils als eine elektrische Synchronmaschine ausgebildet sind.

Diese Ausgestaltung ist besonders vorteilhaft, da Hochtemperatur-Supraleiter-Generatoren ein vergleichsweise geringes Gewicht aufweisen und außerdem die Netzsteifigkeit des Antriebssystems gegenüber einer Verwendung herkömmlicher Generatoren erhöhen.

Eine weitere Ausgestaltung der Erfindung sieht einen gemeinsam von dem Frequenzumrichter und dem Antriebsgenerator antreibbaren Antriebselektromotor vor.

Diese Ausgestaltung der Erfindung ermöglicht vorteilhaft, den Antriebselektromotor zur Erzielung von Höchstgeschwindigkeiten des Schiffes gemeinsam durch den Frequenzumrichter und den Antriebsgenerator anzutreiben.

Eine weitere Ausgestaltung der Erfindung sieht eine Antriebsmaschine und einen Antriebsgenerator vor, die dazu ausgelegt sind, dem Antriebselektromotor elektrische Leistungen zuzuführen, die größer als dem Antriebselektromotor mittels des Frequenzumrichters aus dem Bordnetz zuführbare elektrische Leistungen sind.

Diese Ausgestaltung realisiert die oben bereits genannte Möglichkeit, den Antriebselektromotor bei höheren Geschwindigkeiten effizient mittels des Antriebsgenerators anzutreiben und bei kleineren Geschwindigkeiten mittels des Frequenzumrichters.

Eine weitere Ausgestaltung der Erfindung sieht genau zwei Antriebselektromotoren zum Antrieb des Schiffes vor und für jeden Antriebselektromotor einen Frequenzumrichter, über den dem Antriebselektromotor elektrische Energie aus dem Bordnetz zuführbar ist, eine Antriebsmaschine, einen von der Antriebsmaschine antreibbaren Antriebsgenerator, und eine elektrische Welle zur Verbindung des Antriebselektromotors mit dem Antriebsgenerator, wobei der Antriebselektromotor wahlweise von dem Frequenzumrichter oder von dem Antriebsgenerator antreibbar ist. Vorzugsweise sind die beiden elektrischen Wellen dabei elektrisch koppelbar.

Diese Ausgestaltung der Erfindung erhöht vorteilhaft die Verfügbarkeit und damit die Ausfallsicherheit des Antriebssystems durch die Verdopplung aller Komponenten (Redundanz) und ermöglicht außerdem den Antrieb zweier Antriebseinheiten, beispielsweise zweier Impeller eines Wasserstrahlantriebs eines Schiffes.

Bei dem erfindungsgemäßen Verfahren zum Betrieb eines erfindungsgemäßen Antriebssystems wird der Antriebselektromotor in einem ersten Leistungsintervall nur mittels des Frequenzumrichters und in einem zweiten Leistungsintervall, das größere Antriebsleistungen als das erste Leistungsintervall enthält, nur mittels des Antriebsgenerators über die elektrische Welle angetrieben.

Das Verfahren realisiert die oben bereits genannte effiziente Verwendung des Frequenzumrichters bei kleinen Geschwindigkeiten und des Antriebsgenerators bei größeren Geschwindigkeiten des Schiffes.

Ferner wird der Antriebselektromotor in einem dritten Leistungsintervall, das größere Antriebsleistungen als das zweite Leistungsintervall enthält, vorzugsweise gemeinsam mittels des Frequenzumrichters und des Antriebsgenerators über eine elektrische Welle angetrieben.

Diese Ausgestaltung des Verfahrens realisiert die oben bereits genannte Möglichkeit, den Antriebselektromotor zur Erzielung von Höchstgeschwindigkeiten des Schiffes gemeinsam durch den Frequenzumrichter und den Antriebsgenerator anzutreiben.

Eine weitere Ausgestaltung der Erfindung sieht einen Betriebsmodus des Antriebssystems vor, in dem von der Antriebsmaschine erzeugte Leistung über den Frequenzumrichter in das Bordnetz eingespeist wird.

Diese Ausgestaltung der Erfindung ermöglicht vorteilhaft, eine von einer Antriebsmaschine erzeugte Überschussleistung, die nicht zum Antrieb des Schiffes benötigt wird, zur Energieversorgung des Bordnetzes zu verwenden, so dass die Leistung von Versorgungsmaschinen, die das Bordnetz sonst mit elektrischer Energie versorgen, reduziert werden kann und/oder diese Versorgungsmaschinen ganz oder teilweise abgeschaltet werden können.

Ein erfindungsgemäßes Schiff weist ein erfindungsgemäßes Antriebssystem mit den oben genannten Vorteilen auf.

Bei einem erfindungsgemäßen Verfahren zum Betrieb eines erfindungsgemäßen Schiffes wird das Antriebssystem des Schiffes gemäß dem erfindungsgemäßen Verfahren zum Betrieb des Antriebssystems mit den oben genannten Vorteilen betrieben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit einer Zeichnung näher erläutert werden.

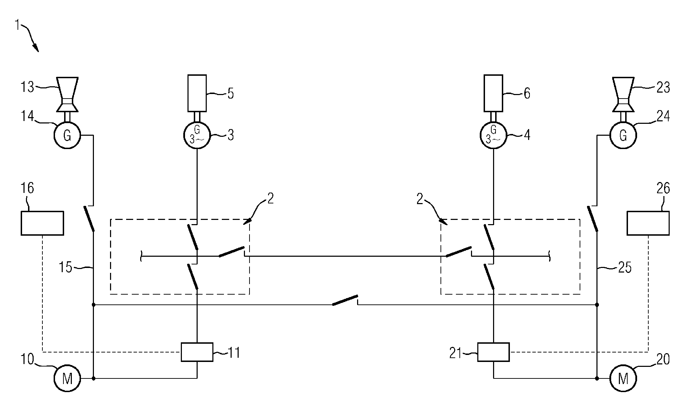

Dabei zeigt die einzige Figur ein Blockdiagramm eines Antriebssystems 1 eines Schiffes. Das Schiff weist ein Bordnetz 2 mit einer festen Bordnetzfrequenz von beispielsweise 60 Hz auf. Das Bordnetz 2 wird über Bordnetzgeneratoren 3, 4, die jeweils beispielsweise von einem Dieselmotor 5, 6 angetrieben werden, mit elektrischer Energie versorgt.

Das Antriebssystem 1 weist beispielsweise zwei Antriebselektromotoren 10, 20 auf, die beispielsweise je einen Impeller eines Wasserstrahlantriebs des Schiffes antreiben.

Ferner umfasst das Antriebssystem 1 für jeden Antriebselektromotor 10, 20 jeweils einen Frequenzumrichter 11, 21, über den dem Antriebselektromotor 10, 20 elektrische Energie aus dem Bordnetz 2 zuführbar ist, eine Antriebsmaschine 13, 23, einen von der Antriebsmaschine 13, 23 antreibbaren Antriebsgenerator 14, 24 eine elektrische Welle 15, 25 zur Verbindung des Antriebselektromotors 10, 20 mit dem Antriebsgenerator 14, 24 und eine Synchronisationsvorrichtung 16, 26 zur Synchronisation einer Generatordrehzahl des Antriebsgenerators 14, 24 mit einer Motordrehzahl des Antriebselektromotors 10, 20.

Die Bordnetzgeneratoren 3, 4 und die sie antreibenden Dieselmotoren 5, 6 sind auf den Energiebedarf des Bordnetzes 2 (z. B. für einen Hotelbetrieb, Nebenantriebe, Waffen- und Leittechnik) und der Antriebselektromotoren 10, 20 in einem ersten Leistungsintervall für Antriebsleistungen, die niedrigen Geschwindigkeiten des Schiffes entsprechen, ausgelegt.

Die Umrichterleistungen der Frequenzumrichter 11, 21 sind auf eine maximale Leistungsabgabe des Bordnetzes 2 ausgelegt.

Die Antriebsmaschinen 13, 23 sind jeweils als eine Verbrennungskraftmaschine, beispielsweise als eine Gasturbine oder als ein Verbrennungsmotor, ausgebildet und für den Leistungsbedarf eines Antriebselektromotors 10, 20 in einem zweiten Leistungsintervall, das größere Antriebsleistungen als das erste Leistungsintervall enthält, ausgelegt.

Die Antriebsgeneratoren 14, 24 und Antriebselektromotoren 10, 20 sind jeweils als eine elektrische Maschine hoher maximaler Drehzahl ausgebildet und jeweils mit einem Drehzahlgeber zur Ausgabe eines Istwertes ihrer Drehzahl versehen. Eine gegebenenfalls erforderliche Übersetzung zwischen einem Antriebsgenerator 14, 24 und einem Antriebselektromotor 10, 20 wird durch eine Anzahl von Polpaaren des Antriebselektromotors 10, 20 realisiert.

Vorzugsweise sind die Antriebsgeneratoren 14, 24 jeweils als ein Hochtemperatur-Supraleiter-Generator (HTS-Generator) ausgebildet.

In dem ersten Leistungsintervall wird ein Antriebselektromotor 10, 20 nur mittels des jeweiligen Frequenzumrichters 11, 21 angetrieben und in einem zweiten Leistungsintervall wird er nur mittels des jeweiligen Antriebsgenerators 14, 24 über die jeweilige elektrische Welle 15, 25 angetrieben. Dadurch wird das Schiff bei kleinen Geschwindigkeiten, die Leistungen des ersten Leistungsintervalls entsprechen, nur mittels von den Dieselmotoren 5, 6 erbrachter Leistung angetrieben und bei größeren Geschwindigkeiten, die Leistungen des zweiten Leistungsintervalls entsprechen, nur mittels von den Antriebsmaschinen 13, 23 erbrachter Leistung angetrieben. Auf diese Weise kann in beiden Geschwindigkeitsbereichen ein guter Wirkungsgrad des Antriebssystems 1 realisiert werden.

Um den Antrieb eines Antriebselektromotors 10, 20 in einem Übergangsbereich zwischen dem ersten und dem zweiten Leistungsintervall von dem jeweiligen Frequenzumrichter 11, 21 auf den jeweiligen Antriebsgenerator 14, 24 umzustellen, wird die Generatordrehzahl des Antriebsgenerators 14, 24 mittels der jeweiligen Synchronisationsvorrichtung 16, 26 mit der aktuellen Motordrehzahl des Antriebselektromotors 10, 20 synchronisiert.

Um Höchstgeschwindigkeiten des Schiffes zu erzielen, kann jeder Antriebselektromotor 10, 20 in einem dritten Leistungsintervall, das größere Antriebsleistungen als das zweite Leistungsintervall enthält, gemeinsam mittels des jeweiligen Frequenzumrichters 11, 21 und des jeweiligen Antriebsgenerators 14, 24 angetrieben werden.

Die beiden elektrischen Wellen 15, 25 sind vorzugsweise über Schalter koppelbar, so dass jeder Antriebselektromotor 10, 20 mittels jedes Antriebsgenerators 14, 24 antreibbar ist. Dadurch wird die Redundanz und Ausfallsicherheit des Antriebssystems 1 erhöht.

Das beschriebene Ausführungsbeispiel kann in verschiedener Weise weitergestaltet werden. Beispielsweise kann eine Anzahl und/oder Leistungsstaffelung der Antriebsgeneratoren 14, 24 und/oder der Bordnetzgeneratoren 5, 6 und der sie jeweils antreibenden Antriebsmaschinen 13, 23 bzw. Dieselmotoren 5, 6 vorgesehen werden, so dass das Antriebssystem 1 auf verschiedene wirtschaftlich optimierte und zueinander abgestufte Betriebsbereiche ausgelegt werden kann. Ferner kann ein Betriebsmodus vorgesehen werden, in dem von wenigstens einer Antriebsmaschine 13, 23 erzeugte Leistung über wenigstens einen Frequenzumrichter 11, 21 in das Bordnetz 2 eingespeist wird, so dass die Dieselmotoren 5, 6 und die Bordnetzgeneratoren 3, 4 zumindest teilweise abgeschaltet werden können.

Obwohl die Erfindung im Detail durch bevorzugte Ausführungs¬beispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Antriebssystem (1) für ein Schiff, wobei das Schiff ein elektrisches Bordnetz (2) mit einer festen Bordnetzfrequenz aufweist, das Antriebssystem (1) umfassend
- einen Antriebselektromotor (10, 20) zum Antrieb des Schiffes,
- einen Frequenzumrichter (11, 21), über den dem Antriebselektromotor (10, 20) elektrische Energie aus dem Bordnetz (2) zuführbar ist,
- eine Antriebsmaschine (13, 23),
- einen von der Antriebsmaschine (13, 23) antreibbaren Antriebsgenerator (14, 24),
- und eine elektrische Welle (15, 25) zur Verbindung des Antriebselektromotors (10, 20) mit dem Antriebsgenerator (14, 24),
- wobei der Antriebselektromotor (10, 20) wahlweise von dem Frequenzumrichter (11, 21) oder von dem Antriebsgenerator (14, 24) antreibbar ist.

2. Antriebssystem (1) nach Anspruch 1,
**gekennzeichnet durch** eine Synchronisationsvorrichtung (16, 26) zur Synchronisation einer Generatordrehzahl des Antriebsgenerators (14, 24) mit einer Motordrehzahl des Antriebselektromotors (10, 20).

3. Antriebssystem (1) nach einem der vorhergehenden Ansprüche,
**gekennzeichnet durch** eine als eine Gasturbine oder als ein Verbrennungsmotor ausgebildete Antriebsmaschine (13, 23).

4. Antriebssystem (1) nach einem der vorhergehenden Ansprüche,
**gekennzeichnet durch** einen als Hochtemperatur-Supraleiter-Generator ausgebildeten Antriebsgenerator (14, 24).

5. Antriebssystem (1) nach Anspruch 4,
**gekennzeichnet durch** einen Antriebsgenerator (14, 24) und einen Antriebselektromotor (10, 20), die jeweils als eine elektrische Synchronmaschine ausgebildet sind.

6. Antriebssystem (1) nach einem der vorhergehenden Ansprüche,
**gekennzeichnet durch** einen gemeinsam von dem Frequenzumrichter (11, 21) und dem Antriebsgenerator (14, 24) antreibbaren Antriebselektromotor (10, 20).

7. Antriebssystem (1) nach einem der vorhergehenden Ansprüche,
**gekennzeichnet durch** eine Antriebsmaschine (13, 23) und einen Antriebsgenerator (14, 24), die dazu ausgelegt sind, dem Antriebselektromotor (10, 20) größere elektrische Leistungen als dem Antriebselektromotor (10, 20) mittels des Frequenzumrichters (11, 21) aus dem Bordnetz (2) zuführbare elektrische Leistungen zuzuführen.

8. Antriebssystem (1) nach einem der vorhergehenden Ansprüche,
**gekennzeichnet durch** genau zwei Antriebselektromotoren (10, 20) zum Antrieb des Schiffes und für jeden Antriebselektromotor (10, 20)
- einen Frequenzumrichter (11, 21), über den dem Antriebselektromotor (10, 20) elektrische Energie aus dem Bordnetz (2) zuführbar ist,
- eine Antriebsmaschine (13, 23),
- einen von der Antriebsmaschine (13, 23) antreibbaren Antriebsgenerator (14, 24),
- und eine elektrische Welle (15, 25) zur Verbindung des Antriebselektromotors (10, 20) mit dem Antriebsgenerator (14, 24),
- wobei der Antriebselektromotor (10, 20) wahlweise von dem Frequenzumrichter (11, 21) oder von dem Antriebsgenerator (14, 24) antreibbar ist.

9. Antriebssystem (1) nach Anspruch 8,
**dadurch gekennzeichnet, dass** die beiden elektrischen Wellen (15, 25) elektrisch koppelbar sind.

10. Verfahren zum Betrieb eines Antriebssystems (1) nach einem der vorhergehenden Ansprüche, wobei der Antriebselektromotor (10, 20) in einem ersten Leistungsintervall nur mittels des Frequenzumrichters (11, 21) und in einem zweiten Leistungsintervall, das größere Antriebsleistungen als das erste Leistungsintervall enthält, nur mittels des Antriebsgenerators (14, 24) über die elektrische Welle (15, 25) angetrieben wird.

11. Verfahren nach Anspruch 10,
**dadurch gekennzeichnet, dass** der Antriebselektromotor (10, 20) in einem dritten Leistungsintervall, das größere Antriebsleistungen als das zweite Leistungsintervall enthält, gemeinsam mittels des Frequenzumrichters (11, 21) und des Antriebsgenerators (14, 24) über eine elektrische Welle (15, 25) angetrieben wird.

12. Verfahren nach Anspruch 10 oder 11,
**dadurch gekennzeichnet, dass** ein Betriebsmodus vorgesehen wird, in dem von der Antriebsmaschine (13, 23) erzeugte Leistung über den Frequenzumrichter (11, 21) in das Bordnetz (2) eingespeist wird.

13. Schiff mit einem Antriebssystem (1) gemäß einem der Ansprüche 1 bis 9.

14. Verfahren zum Betrieb eines Schiffes gemäß Anspruch 12, wobei das Antriebssystem (1) des Schiffes gemäß einem der Ansprüche 10 bis 12 betrieben wird.
